# EUROPEAN PATENT APPLICATION

(11) **EP 1 650 905 A1**
(43) Date of publication of application: **26.04.2006**
(21) Application number: 04425794.7
(22) Date of filing: 25.10.2004
(51) Int. Cl.: H04L 12/56, H04L 12/46

(54) **Method for bandwidth profile management in a Metro Ethernet network**

(71) Applicant: SIEMENS AKTIENGESELLSCHAFT, 80333 München (DE)
(72) Inventor: De Prezzo, Stefano, 67100 L'Aquila (IT)

(57) **Abstract**

There is provided a method of traffic management in a communication network, such as a Metro Ethernet network, in which communication resources are shared among different virtual connections each carrying data flows relevant to one or more virtual networks and made up of data units comprising a tag with an identifier of the virtual network the flow refers to and of a class of service allotted to the flow, and in which, in case of a congestion at a receiving node, a pause message is sent back to the transmitting node for temporary stopping transmission. For a selective stopping at the level of virtual connection and possibly of class of service, the virtual network identifier and possibly also the class-of-service identifier are introduced in the pause message.

## Description

### Field of the invention

The present invention refers to computer communication systems, and more particularly it concerns a method of traffic management in a computer communication network and a network node implementing the method, as well as a network including said node.

Preferably, but not exclusively, the invention applies in networks based on Ethernet specifications, in particular to bandwidth profile management at the ingress User Network Interface (UNI) of a Metro Ethernet Network.

### Background of the invention

Ethernet is a widely used communication medium allowing communication through different interfaces and at various rates, up to the Gbit/s. Thousands of subscribers already use Ethernet services and their number is growing rapidly. Such subscribers are attracted by the benefits of the Ethernet services, including:
ease of use
cost effectiveness
flexibility.

At present metropolitan area networks based on Ethernet (Metro Ethernet networks) are being defined by the Metro Ethernet Forum (MEF). A Metro Ethernet network is substantially a publicly accessible metropolitan area network controlled by a single administrator, for instance an Internet Service Provider.

An important feature of Metro Ethernet networks, of particular interest for the invention, is that they can be shared among different customer networks, each of them being unaware of the use of the Metro network by the other ones. Each of such networks is called Virtual Local Area Network (VLAN).

A model for defining the services offered by a Metro Ethernet network is disclosed in Technical Specification MEF 1.0 "Ethernet Service Model, Phase 1", published by the Metro Ethernet Forum on 10 November 2003.

The Metro Ethernet network administrator (the "provider") offers the customers services differentiated according to some performance level (Class of Service, in short CoS), for instance related to frame loss and frame delay. The performance levels agreed between the provider and a customer are defined in the so-called Service Level Agreement (SLA) and Service Level Specifications (SLS).

Assuring such a performance level implies use of traffic management mechanisms at the nodes (usually referred to as "switches" or "routers") of the network.

At the User Network Interface (UNI), which is defined as the demarcation point between the responsibilities of the Service Provider and of a customer, traffic management functions are based, inter alia, on the so-called Bandwidth Profile, which is a set of traffic parameters that governs the expected arrival pattern of customer traffic.

Further information on the bandwidth profile can be found for instance in the above-mentioned Technical Specification of MEF and in a further MEF document (document D00029, "Traffic Management Specification, Phase I, Draft v.7.0", published on 1 March 2003).

As disclosed in such documents, there are three ways in which a bandwidth profile can be applied at the ingress into the Metro Ethernet network:
per Ingress UNI,
per EVC (Ethernet Virtual Connection, that is the association of two or more UNIs that limits the exchange of service frames to UNIs belonging to the EVC itself), and
per EVC and CE-VLAN CoS (CE stands for Customer Edge, which is the equipment on the subscriber side of a UNI);

The Ingress bandwidth profile per ingress UNI applies to all ingress service frames at the UNI, without taking into account the EVCs the frames belong to

The Ingress bandwidth profile per EVC provides a bandwidth profile that applies to all service frames for a given EVC.

The Ingress bandwidth profile per EVC and CE-VLAN CoS provides a bandwidth profile that applies to all service frames having a specific CoS in a given EVC.

The bandwidth profile should be enforced by the provider's network since it is part of the SLS/SLA. When a violation of the profile occurs, for instance due to short-term transient overload conditions, the service provider has to take specific actions.

According to the above mentioned document D00029 of MEF, a level of compliance of the service frames to the bandwidth profile may be identified by means of three different colours, and the actions may be recolouring or dropping frames.

An alternative action that may be taken is exerting a backpressure on the upstream equipment by sending a PAUSE frame in order to limit the traffic coming from the customer(s) through a temporary suspension of the transmission. Use of pause frames is disclosed in IEEE Standard 802.3. The pause function (i.e. near flow control) is designed to prevent switches from unnecessarily discarding frames due to input buffer overflow under short-term transient overload conditions.

However, the pause mechanism as defined in the standard has the drawback that it can only be applied to all frames at the UNI. Taking into account that Ethernet flows from different VLANs and with different Classes of Service are multiplexed on the UNI, this mechanism entails that also flows from VLANs and/or with Classes of Service that do not contribute to the overflow are stopped and unnecessarily delayed.

Thus the need arises of a selective management of the pause mechanism.

A proposal to this end is disclosed in US Patent Application 2004095882. That document discloses a mechanism operating at the provider network level. A receiving node reads the identifiers of the ingress and egress nodes from a frame causing congestion and includes the addresses of the ingress and egress nodes in the pause frame. At a transmitting node, upon reception of the pause message, only frames having the ingress and egress node addresses specified in the pause frame are temporarily stopped.

The selectivity provided by the prior art is not yet satisfactory.

### Summary of the Invention

There is provided a method of traffic management in a communication network, in which communication resources are shared among different virtual connections each carrying data flows from one or more virtual networks, and in which data units in each flow comprise a tag including an identifier of the virtual network the flow refers to and an identifier of a service level required by the flow. At a receiving node of the network, said data flows are temporary stored and, upon detection of a congestion, a pause message is sent to a transmitting node for temporarily stopping data transmission;

According to the invention, the method is characterised by the steps of:
- reading said tags at said receiving node;
- introducing into the pause message the virtual network identifier associated to at least one virtual network having given service level characteristics, e.g. the virtual network whose flows have the lowest priority;
- reading, at said transmitting node, the virtual network identifier from said pause message; and
- selectively stopping transmission of flows belonging to the virtual network identified in the pause message.

The invention further concerns a node having a controller implementing the method and a network including said nodes.

Preferably, the network is a Metro Ethernet Network, and the traffic management is performed at the ingress UNI interface.

If the traffic management provides for applying an ingress bandwidth profile per virtual connection or per class of service, the selective stopping of transmission based on the tag included in the pause frame concerns one or more specific virtual connections or one or more specific classes of service.

A more selective management of the pause mechanism than disclosed in the prior art is thus obtained.

### Brief description of the drawings

Preferred embodiments of the invention, given by way of non-limiting example, will now be disclosed with reference to the accompanying drawings, in which:
- Fig. 1 is a schematic representation of the scenario of application of the invention;
- Figs. 2A, 2B, 2C are graphical representations of the different rules of ingress bandwidth profile application at the UNI in a Metro Ethernet network;
- Fig. 3 shows the structure of the conventional pause frame;
- Figs. 4 and 5 shows the structure of the pause frame according to two embodiments of the invention;
- Figs. 6 and 7 are two examples of application of the invention; and
- Figs. 8 and 9 are diagrams of principle of the generation of the pause frame at a receiving node and of its processing at a transmitting node.

### Detailed description of the preferred embodiments

The invention will be disclosed hereinbelow with reference to the preferred application at the level of the UNI at the ingress into a Metro Ethernet network.

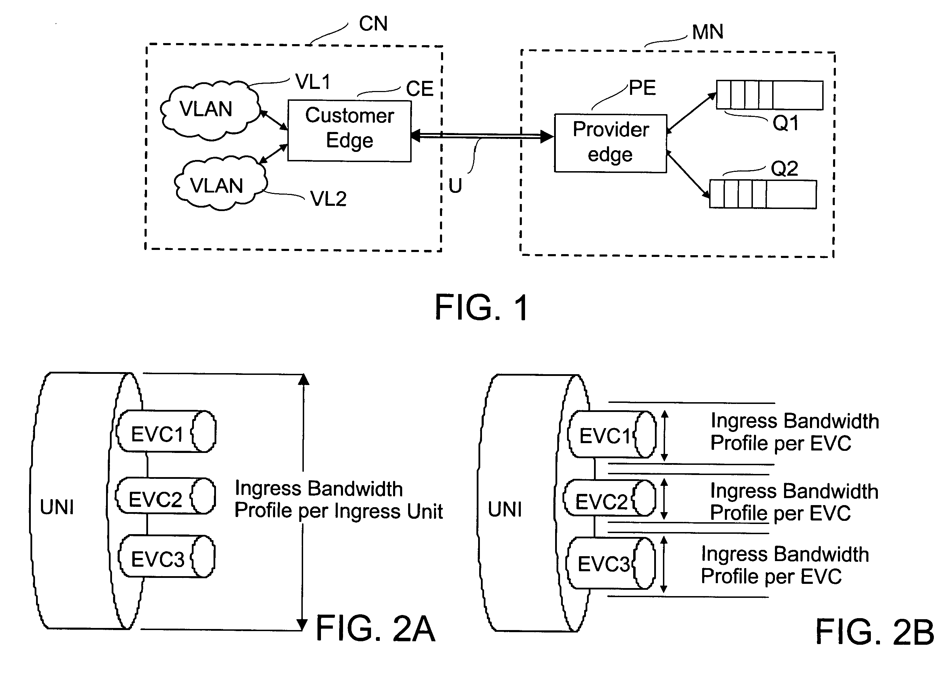

The relevant scenario is depicted in Fig. 1. The drawing shows a customer network CN in which a number of VLANs VL1, VL2 ... are implemented. The Ethernet flows from VLANs VL1, VL2 ... are multiplexed at customer edge CE onto UNI interface U. Interface U transfers the flows to Provider Edge PE at the ingress of Metro Ethernet Network MN, from which the Ethernet flows are then forwarded to the concerned nodal queues, two of which are shown at Q1, Q2.

According to the Ethernet specifications, the frames of VLANs VL1, VL2 ... are mapped at CE into a number of EVCs across the UNI. The frames may contain a tag (VLAN tag) with information allowing identifying the VLAN a certain flow refers to. Different sets of frames of a same VLAN (e.g. sets of frames belonging to different services) may be allotted different classes of service and hence different priorities. A portion of the tag includes priority bits identifying the different classes of service.

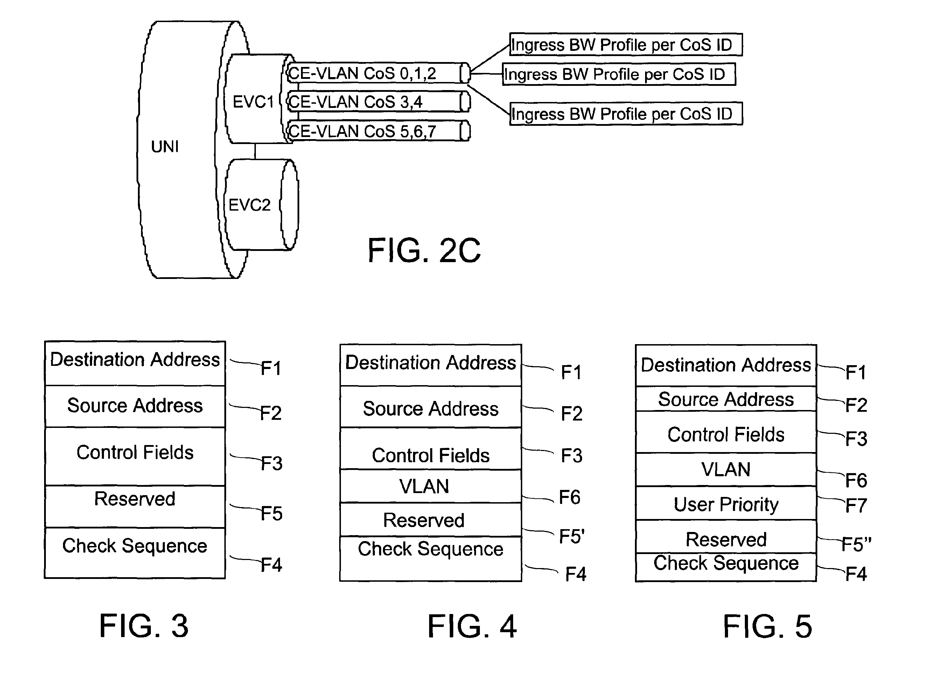

For sake of a better understanding of the description, the different manners of application of the bandwidth profile at PE are reproduced in Fig. 2A (Profile Per Ingress UNI), Fig. 2B (Profile Per EVC) and Fig. 2C (Profile Per EVC and CE-VLAN CoS). Those Figures are taken from the aforementioned document D00029 of MEF. The essential features of the three kinds of profile management have been set forth in the introduction of the specification and it is not necessary to go in further details, which can be found in said document D00029.

Still for sake of better understanding of the description, Fig. 3 reproduces the structure of the conventional pause frame. As shown, the frame is organised into a number of fields, namely: destination and source address fields F1, F2 (6 bytes each); control fields (grouped together in F3 in the drawing and comprising in the whole 6 bytes), characterising the frame as a control frame, in particular a pause frame, and specifying the pause duration; a frame check sequence field F4 of 4 bytes. Since Ethernet frames have a standard minimum length of 64 bytes, a field F5 of 40 bytes, reserved for future uses, remains between fields F3, F4.

In the scenario depicted in Fig. 1, the traffic management based on the pause frame shown in Fig. 3 corresponds to the bandwidth profile application shown in Fig. 2A (profile per ingress UNI). Hence its application would imply stopping the transmission from the whole customer network CN. Should a selective action be desired, it could be based only on frame recolouring or dropping.

In order to selectively apply the near flow control mechanism based on the pause frame, according to the invention the frame message includes, as shown in Fig. 4, a further field F6 intended to contain the VLAN tag (more specifically, the VLAN identifier). The VLAN tag (two bytes) can occupy as many bytes of the reserved field. It could be also possible to insert a list of VLAN tags instead of a single VLAN tag.

In order the modified pause frame can be exploited, the downstream equipment (PE in Fig. 1) shall include a controller that, while looking at the filling state of the various input buffers, is also capable of extracting from the received frames the VLAN tag and inserting into the pause frame. Similarly, the downstream equipment (CE in Fig. 1) shall include a controller that is capable of extracting the VLAN tag from the received pause frame and to selectively act on the various VLANs.

However, the proposed solution is compatible with switches implementing the current near flow control. Indeed any such switch, upon receiving a pause frame with a VLAN tag as shown in Fig. 4 from a downstream switch, will simply neglect the content of field F6, since it is not equipped for interpreting such field, and will continue stopping all egress Ethernet frames.

The same principles can be adopted for managing the bandwidth profile application scenario shown in Figure 2C. In this case the pause frame includes (as shown in Fig. 5) a further field F7, intended to contain the priority bits of the VLAN tag. Also field F7 occupies a corresponding portion of the reserved field.

Also in this case, a list of VLANs/Priorities could be introduced.

Moreover, when field F7 is used, field F6 could even take a particular value meaning "ALL VLANs": in such case the flow is identified only by the priority.

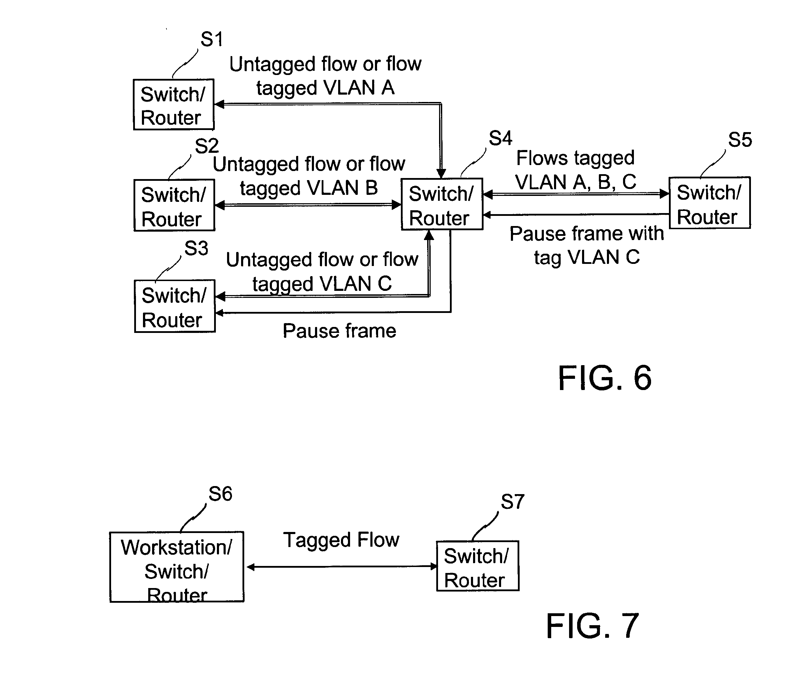

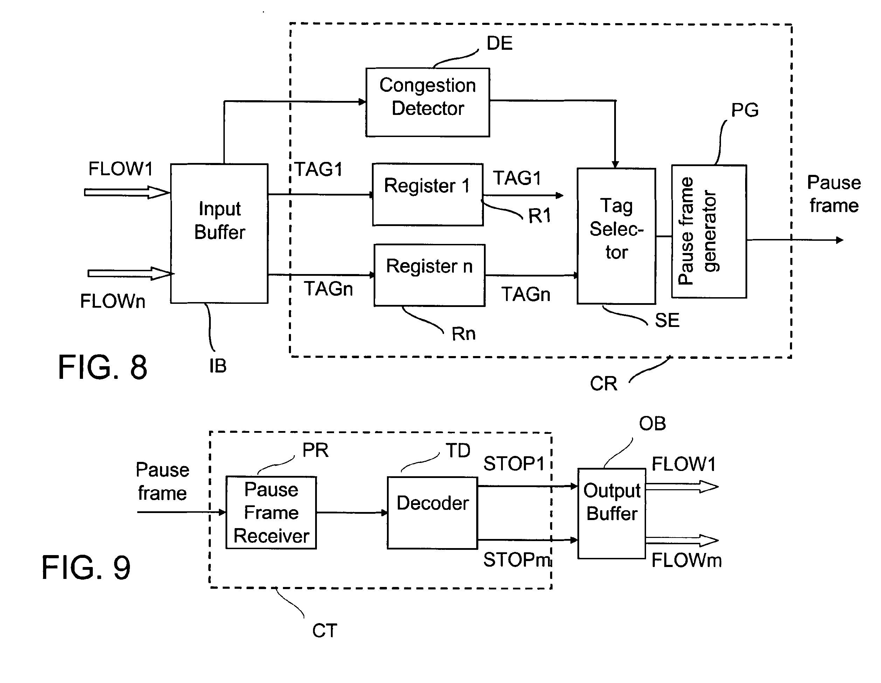

Some examples of use of the invention are now described with reference to Figs. 8 and 7. In the description of such examples, a comparison with the standard traffic management policy is made.

In the example of Fig. 6, three switches or routers S1, S2 and S3 generate respective Ethernet flows and send them to a further switch S4. The Ethernet flows are shown by double line arrows in the drawing. The flows can be either untagged flows or flows already tagged with a VLAN tag. In the latter case, we assume that the flows from S1, S2, S3 are tagged with VLAN tags "A", "B" and "C", respectively. If any of such flows is untagged, the proper tag A, B or C will be added by switch S4.

The tagged flows are multiplexed by switch S4 on a same transmission medium and forwarded to switch S5, which performs the policing on the flows in ingress. The flows are distinguished by VLAN tag. Therefore, in this example, switch S5 is receiving three different flows. It is supposed that each flow has to be managed in different way: for instance the flow coming from switch S1 has higher priority than the flow coming from S2, and the latter has higher priority than the flow coming from S3.

Supposing that switch S5 detects a congestion, two possible actions can be implemented with the current standard function:
- to discard the Ethernet frame coming from switch S4 taking the priority defined by the SLA into account; or
- to send the pause frame towards switch S4, thus stopping all Ethernet flows without taking the priority into account.

By using the invention, the Ethernet flow with the lowest priority (identified by a given VLAN tag, here tag "C") can be stopped (without being dropped), without affecting the Ethernet flows with higher priorities.

Therefore, in case of congestion, the following actions have to be carried out:
- switch S5 sends back the pause frame with VLAN tag "C" in field F6 to switch S4;
- switch S4 sends back the pause frame to switch S3 in order to stop the frame transmission.

The pause frames are explicitly indicated in the drawing and are shown by single-line arrows.

In the example shown in Fig. 7, a workstation S6 sends tagged frames to switch S7. It is supposed that switch S7 manages three different Classes of Service (e.g. three different service models):
- Expedited Forwarding (EF) for real time applications like VolP (Voice over IP) or Video;
- Assured Forwarding (AF) for services with committed bandwidth; and
- Best Effort (BE) for using the available bandwidth.

The VLAN priority inside the Ethernet frames identifies the Class of Service a given Ethernet frame belongs to.

Supposing that switch S7 detects congestion, two possible actions can be implemented with the current standard traffic policing:
to discard the Ethernet frames coming from workstation S6 taking the Class of Service priority into account;

- to send the pause toward workstation S6, thereby stopping all Ethernet flows, without taking the priority into account (in this case the real time application cannot be guaranteed).

By using the invention, the Ethernet flow with the lowest priority (in the present example, the Best Effort traffic) can be stopped (without being dropped), without affecting the Ethernet flows with higher priorities (e.g. VoIP). Therefore, in case of congestion, switch S7 has to send back the pause frame with the appropriate VLAN priority identifier to workstation S6 in order to stop such a lowest priority Ethernet flow

Another possible situation is when an Ethernet bandwidth associated with one CoS exceeds the bandwidth stated in the SLA. Two possible actions can be implemented with the current standard function:
- to discard the Ethernet frames which exceed the bandwidth stated in the SLA, or
- to carry the Ethernet frames and, in case of congestion, to discard the frames which exceed the assigned bandwidth.

Again, like in the case of congestion, the invention allows stopping the flow that exceeds the bandwidth stated in the SLA without frame loss.

In a variant of the first application example, the VLAN priority could be used for distinguishing among different Ethernet flows and, in a variant of the second application, the VLAN tag could be used for distinguishing among different Service Classes of service.

Fig. 8 shows a block diagram of the operating principles of the receiving side portion CR of the controller in a node. An input buffer IB in the node receives a plurality of Ethernet flows FLOW1...FLOWn belonging to different VLANs or having different CoS. In conventional manner, buffer IB could be virtually subdivided into different sections, each associated with one of the flows. Tags TAG1...TAGn of flows FLOW1...FLOWn are taken from the flows and stored in respective registers R1...Rn. A congestion detector DE recognises the occurrence of a congestion in one or more buffer sections and signals the congestion to a selection logic SE. Upon occurrence of the congestion, selection logic SE selects, based on certain criteria, the tag(s) associated with one or more flows and sends it (them) to pause message generator PG, for insertion into the proper field of the pause frame. The criterion for tag selection could be related for instance to the priority allotted to the data flows, as disclosed in the above examples. The term "Tag" here can be the only VLAN identifier (see Fig. 4) or can include both the VLAN and the priority identifiers (Fig. 5). The flows outputting from buffer IB have not been indicated since they are not of interest for the understanding of the pause generation.

Fig, 9 shows a block diagram of the operating principles of the transmitting side portion CT of the controller in a node arranged to handle the pause frames according to the invention. A pause receiver PR receives the pause frame with the tag(s) and extracts the tag(s) and the information about the suspension time. A tag decoder TD decodes the extracted tag(s) and consequently generates commands STOP1...STOPm for temporarily stopping transmission of the concerned flow(s) FLOW1...FLOWm by output buffer OB.

In summary, the invention allows managing different traffic profiles (e.g. VoIP, Best Effort, ...) without framing loss, assuring the negotiated latency. Besides, the UNI interface can carry the traffic of several clients that are distinguished by VLAN tag. Based on SLS (SLA), a switch can manage the traffic of the different clients in different ways: for instance in case of over-subscription it is possible to stop some client Ethernet traffic and to carry some other traffic without frame losses.

It is evident that the above description has been given only by way of non-limiting example and that changes and modifications are possible without departing from the scope of the invention.

So, even if the invention has been described with particular reference to the traffic management at the ingress into the Metro Ethernet Network, the same idea can be applied in any node of a network where a resource is shared among different VLANs identified by respective tags and/or managing services requiring different service levels, e. g. different priorities, identified by respective priority identifiers and where a receiving node can exert a backpressure on a transmitting node through a pause message.

## Claims

1. A method of traffic management in a communication network in which communication resources are shared among different virtual connections each carrying data flows from one or more virtual networks (VL1, VL2), wherein data units in each flow comprise a tag (TAG1...TAGn) including an identifier of the virtual network the flow refers to and an identifier of a service level required for the flow, the method comprising the steps of:
- receiving from a transmitting node (CE; S4; S6) and temporary storing, at a receiving node (PE, S5, S7), said data flows (FLOW1...FLOWn), and
- detecting a congestion at said receiving node (PE, S5, S7) and consequently sending a pause message towards the transmitting node (CE; S4; S6) for temporarily stopping data transmission;
**characterised in that** the method further comprises the steps of:
- reading at said receiving node (PE; S5; S7) the tags (TAG1...TAGn) from the arriving flows (FLOW1...FLOWn),
- introducing into a first supplementary field (F6) of the pause message the identifier of at least one virtual network (VL1, VL2) whose data flows require a given service level;
- reading, at said transmitting node (CE; S4; S6), the virtual network identifier from said pause message; and
- selectively stopping transmission of flows belonging to the at least one virtual network (VL1, VL2) identified in the pause message.

2. A method as claimed in claim 1, **characterised in that** said step of introducing includes introducing into said first supplementary field (F6) of the pause message a list of identifiers of virtual networks requiring given service levels, and said selective stopping step includes stopping transmission of the data flows belonging to the virtual networks (VL1, VL2) identified by said identifier list.

3. A method as claimed in claim 1 or 2, **characterised in that** said step of introducing further includes introducing into a second supplementary field (F7) of the pause message the identifier of at least one service level, and said step of selectively stopping includes stopping transmission of data flows belonging to the virtual network(s) specified in the pause message and requiring the at least one service level specified in the pause message.

4. The method as claimed in claim 2 or 3, **characterised** said step of introducing includes introducing a list of said service level identifiers into said second supplementary field (F7), and said selective stopping step includes stopping transmission of the flows requiring the service levels identified by said identifier list.

5. The method as claimed in any preceding claim, **characterised in that** said selective stop of the transmission for the flows of different virtual networks is performed based on the service level identifier.

6. The method as claimed in claim 5, **characterised in that** said step of introducing includes introducing into said first supplementary field (F6) an identifier having a predetermined value meaning "all virtual networks".

7. The method as claimed in any of claims 1 to 4, **characterised in that** said selective stop for data units requiring a specified performance level is performed based on the virtual network identifier.

8. The method as claimed in any preceding claim, **characterised in that** the virtual network identifier(s) and the service level identifier(s) introduced into the first and second supplementary fields (F6, F7) of the pause message are those associated with the flows to which a lowermost priority is allotted.

9. The method as claimed in any preceding claim, **characterised in that** said flows are Ethernet flows.

10. The method as claimed in claim 9, **characterised in that** said receiving node is a Provider Edge node (PE) of a Metro Ethernet Network (MN) and said transmitting node is a Customer Edge node (CE) of a customer network (CN).

11. The method as claimed in claim 10, **characterised in that** said provider edge node (PE) provides for a traffic management by applying ingress bandwidth profiles individual for different virtual connections.

12. The method as claimed in claim 10, **characterised in that** said provider edge node (PE) provides for a traffic management by applying ingress bandwidth profiles individual for different classes of service in a same virtual connection.

13. A node for a communication network in which communication resources are shared among different virtual connections each carrying data flows from one or more virtual networks (VL1, VL2), said data flows being made up of data units comprising a tag including an identifier of the virtual network the flow refers to and an identifier of a service level required for the flow; said node comprising a controller (CR, CT) including, at a flow receiving side, means (DE, PG) for detecting a congestion and for sending a pause message towards an upstream node (CE; S4; S6); the node being **characterised in that** said controller (CR, CT) further comprises, at said flow receiving side:
- means (R1...Rn) for reading from the received data flows and storing said tags; and
- means (SE, PG), connected to the output of said reading means (R1...Rn) and controlled by said congestion detection means (DE), for selecting, upon occurrence of a congestion, the tag associated with at least one data flow having determined service level requirements and introducing the virtual network identifier(s) of said at least one data flow into a first supplementary field (F6) of the pause message.

14. A node as claimed in claim 13, wherein said controller (CR, CT) includes, at a flow transmitting side, means (PR) for receiving a pause message from a downstream node (PE; S5; S7) and for temporary stopping data transmission towards said downstream node (PE; S5; S7), **characterised in that** said controller (CR, CT) further comprises, at said flow transmitting side, means (TD), connected to the output of said pause message receiving means (PR), for reading from a received pause message and interpreting said virtual network identifier(s), said reading and interpreting means (TD) generating commands (STOP1...STOPm) for selectively stopping transmission of the flow(s) (FLOW1...FLOWm) belonging to the virtual network(s) (VL1, VL2) identified in the pause message.

15. A node as claimed in claim 13 or 14, **characterised in that** said introducing means (SE, PG) are arranged to introduce said service level identifier into a second supplementary field (F7) of the pause message, and said reading and interpreting means (TD) at the transmitting side are arranged to selectively stop transmission of flows requiring the service level specified in the pause message.

16. A node as claimed in any of claims 13 to 15, **characterised in that** it is a node (PE; S1 - S5; S6, S7) of a Metro Ethernet Network.

17. A node as claimed in claim 16, **characterised in that** it is a provider edge node (PE) of said Metro Ethernet Network providing for applying an ingress bandwidth profile per virtual connection or per class of service, wherein said selective stopping of transmission concerns one or more specific virtual connection or one or more specific classes of service.

18. A communication network including nodes performing a traffic management as claimed in any of claims 1 to 12.

19. A communication network including nodes as claimed in any of claims 13 to 17.
